# EUROPEAN PATENT SPECIFICATION

(11) **EP 1 442 688 B1**
(45) Date of publication and mention of the grant of the patent: **08.08.2007**
(21) Application number: 04250575.0
(22) Date of filing: 03.02.2004
(51) Int. Cl.: A47J 27/21, A47J 31/60

(54) **Water heating appliances**
Wasserheizgeräte
Dispositifs de chauffage d'eau

(30) Priority: 03.02.2003 GB 0302454
(43) Date of publication of application: 04.08.2004
(73) Proprietor: STRIX LIMITED, Ronaldsway, Isle of Man IM9 2RG (GB)
(72) Inventor: Scott, Michael James, Isle of Man IM9 5PH (GB)
(74) Representative: Leckey, David Herbert

(56) References cited:
- WO-A-96/22045
- GB-A- 2 306 209
- US-A- 3 793 933
- US-B1- 6 178 290

## Description

The present invention relates to water heating appliances and in particular to water heating appliances which incorporate means for treating the water heated in the appliance.

A water heating appliance which incorporates water treatment means to remove impurities, odours, limescale and so forth from the water, has been proposed for example in Applicant's International Patent Application WO 01/47399. This appliance comprises a water heating chamber, a chamber for receiving water to be heated and a water treatment means, more particularly a cartridge arranged between the water receiving chamber and the water heating chamber so that the water must flow through the treatment means into the heating chamber for heating.

An appliance of this type has also been produced commercially by Brita under the trade name Acclario® and is described in US patent no. 6178290. In this product, the outlet from the treatment cartridge to the water heating chamber is selectively opened and closed by a manually operable flow control valve. When the water receiving chamber is first filled with water, this valve can be either open or closed but in order to allow the water to flow through the treatment cartridge, it must be opened. Once the desired amount of water has flowed into the water heating chamber, the valve is shut manually, whereupon the heater associated with the heating chamber can be energised to heat the water in that chamber. An interlock prevents the heating means being energised until such time as the flow control valve is shut.

WO 96/22045 discloses a kettle having a fiter cartridge mounted in the base of a hopper above a water boiling chamber.

A magnetic float in the water boiling chamber prevents heating from commencing until a predetermined level of water is contained in the boiling chamber.

The reason that the heating means cannot be energised before the water treatment has been completed is that the heating means is of relatively high power (typically about 3 kilowatts) and the rate of flow through the treatment cartridge is relatively slow. Thus, should the heating means be energised with no or very little water in the water heating chamber, this water would boil dry causing the heating means to overheat thereby activating an overheat protection control associated with the heater, thereby disabling the heater.

Whilst the system employed in the Acclario® overcomes this problem, it does have the disadvantage that the user must wait until treatment of the desired mass of water is complete before heating can start. This can be time consuming for the user.

Accordingly, the present invention seeks to provide an appliance in which heating and treatment can occur at the same time thereby allowing water to be boiled more quickly.

From a first aspect, therefore, the present invention provides a water heating appliance comprising:
a water heating chamber having water heating means associated therewith;
a water receiving chamber for receiving water to be heated in the water heating chamber;
a water treatment means arranged between the water receiving chamber and the water heating chamber such that water flows from the water receiving chamber to the water heating chamber through the treatment means; wherein:
   said water heating means is switchable between a low power setting and a high power setting; and characterised in that:
      said appliance further comprises switch means responsive to a quantity of water in the water receiving chamber and operable in the event of the quantity of water in that chamber falling below a predetermined value to switch the water heating means from its low power to its high power setting.

From a second aspect the invention provides a method of treating and heating a water comprising the steps of:
supplying water to be treated and heated to a water receiving chamber;
passing said water through a water treatment means to a water heating chamber; and
energising a water heating means associated with the water heating chamber at a first, relatively low power; and characterised by:
   sensing the quantity of water present in the water receiving chamber;
   and, when less than a predetermined quantity of water is sensed as remaining in the water receiving chamber heating the water heating chamber at a higher power.

Thus in accordance with the invention, the water heating means is energised at a low power setting until such time as a predetermined quantity of water remains in the water receiving chamber whereupon the heating means is switched to its high power setting. This means that as the water heating chamber is filling with water, that water is heated at a low power, thereby reducing the overall time taken to bring the water in the heating chamber to boiling.

Preferably a sensor is provided to sense the quantity of liquid remaining in the water receiving chamber, the sensor being operably coupled to the switch means. Preferably the sensor senses the level of water in the chamber.

In a first embodiment of the invention, the sensor comprises a float which operates to switch the heating means from its low power to its high setting when the level of water in the water receiving chamber falls to a predetermined level.

The float may be mechanically connected to the switch means by a suitable mechanism. For example in one embodiment, the float may operate a switch in the manner of a ballcock. In a preferred embodiment, however, the float is coupled to the switch means magnetically. Thus the appliance may comprise a magnetic float switch.

In a further embodiment, the sensor may be an optical sensor which senses the presence or absence of water at a predetermined level in the water receiving chamber.

In further embodiments, the quantity of water in the water receiving chamber may be determined by weight rather than level, so in a further embodiment the switch means may comprise a weight sensor such as a load cell or strain gauge which will effect the heater switching when the weight of the liquid in the receiving chamber falls below a predetermined figure.

Preferably the switching is effected when the water receiving chamber is substantially empty such that higher power heating occurs only after substantially all the water in the water receiving chamber has passed into the water heating chamber. This prevents the possibility of water in the heating chamber boiling before all the treated water has entered the water heating chamber. This prevents heated water being cooled by cooler water admitted into the heating chamber after heating has stopped.

The high power and low power settings of the heating means may be chosen with any appropriate values. The lower power setting is preferably chosen such as to be insufficient to boil the water entering the heating chamber, thereby reducing the risk of the heating chamber boiling dry. Typically, therefore, the low power setting of the heating means may be up to about 1 kilowatt. The high power setting may be significantly higher, for example up to about 3 kilowatts.

Most conveniently, the heating means comprises two heaters which are selectively connected in parallel by the switch means of the appliance.

The heaters may be conventional sheathed heating elements, preferably underfloor sheathed heating elements, or thick film heating elements.

A preferred embodiment of the invention will now be described by way of example only with reference to the accompanying drawings in which:
Figure 1 shows a schematic embodiment of the invention; and
Figure 2 shows a wiring diagram of the appliance shown in Figure 1.

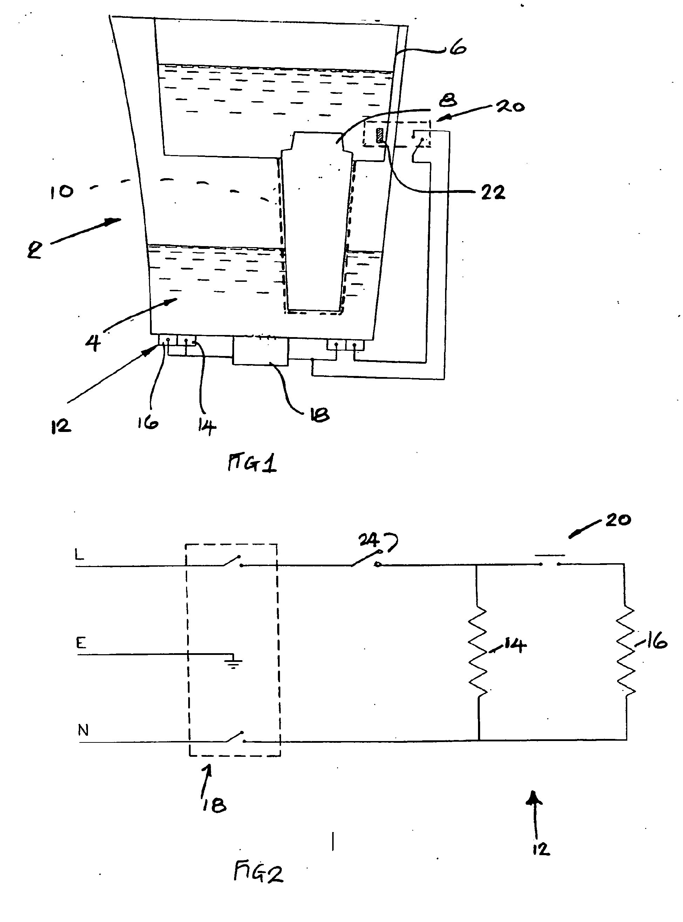

With reference to Figure 1, a cordless water boiling appliance 2 in accordance with the invention comprises a water heating chamber 4, a water receiving chamber 6 and a water treatment filter 8 arranged between the water receiving chamber 6 and water heating chamber 4. The water receiving chamber 6 may be suitably mounted in or on the water boiling chamber 4 and the water treatment cartridge 8 depends from the water receiving chamber 6 into the water boiling chamber 4.

The water treatment cartridge 8 may be received in a socket 10 provided in the base of the water receiving chamber and shown in phantom in Figure 1, or it may be suitably supported by the water receiving chamber 6 so as to depend freely therefrom.

Water in the water heating chamber 4 is heated by heating means 12. The heating means 12 comprises first and second heaters 14, 16, connectable in parallel. In this particular embodiment, the heater 14 is rated at 1 kilowatt and the heater 16 at 2 kilowatts.

In the embodiment shown, the heaters 14, 16 are sheathed electric heating elements which are suitably attached to the underside of the base of the water heating chamber 4.

Power is supplied to the heaters 14, 16, through a cordless electrical connector 18 which engages a complementary power supply connector on a power supply base for the appliance (not shown).

Associated with the water receiving chamber 6 is a switch 20 which is capable of selectively switching the heater 16 into parallel connection with heater 14. In this embodiment, the switch 20 is a magnetic float switch which acts to close a set of contacts within the switch 20 when a float 22 falls to a predetermined water level within the water receiving chamber.

Operation of the appliance described above will now be described.

Initially, the water heating chamber 4 of the appliance will be empty and both heaters 14, 16 de-energised through a switch 24. This switch 24 is preferably the steam or boiling sensitive control for the appliance which will have operated when the water last boiled. The switch 24 is also manually operable. When it is desired to boil water in the chamber 4, water is filled into the water receiving chamber 6, whereupon water begins to pass through the treatment cartridge 8 into the water heating chamber 4. The switch 24 can then be closed manually to energise the heating means 12.

Provided water has been filled into the receiving chamber 6 above a predetermined level, the float switch 20 will be open, meaning that it is only the low power heating element 14 which is energised. As water filters through the treatment cartridge 8 the water accumulating in the heating chamber 4 will be heated at the relatively low power of 1 kilowatt. This level of heating continues until such time as the water level in the water receiving chamber 6 falls to a predetermined level (preferably when the chamber 6 is substantially empty), at which level the float switch 20 closes so as to connect the heating element 16 in parallel with the heating element 14. This increases the heating the water in the heating chamber at the relatively high power of 3 kilowatts.

Heating of the water in the heating chamber 4 will continue until such time as that water boils. At that point, the steam or boiling sensitive control 24 disconnects the power supply to the heaters 14, 16 thereby discontinuing boiling of the water.

Conveniently, the boiling control may be of the type disclosed in Applicant's WO 95/34187 in which a steam control and overheat protection control are integrated with the cordless electrical connector 18. Such an system is available commercially as the Applicant's U1830 system. Alternatively, the boiling control may be separate from the connector and overheat protection control, for example being one of the Applicants R48 switches or the like.

It will be appreciated that modifications may be made to the embodiment described above without departing from the scope of the invention. For example, the magnetic float switch 20 may be substituted by a mechanical switch, for example a ballcock operated switch.

## Claims

1. A water heating appliance (2) comprising :
a water heating chamber (4) having water heating means (12) associated therewith;
a water receiving chamber (6) for receiving water to be heated in the water heating chamber (4) ;
a water treatment means (8) arranged between the water receiving chamber (6) and the water heating chamber (4) such that water flows from the water receiving chamber (6) to the water heating chamber (4) through the treatment means (8) ; wherein :
said water heating means (12) is switchable between a low power setting and a high power setting ; and **characterised in that** : said appliance (2) further comprises switch means (20) responsive to a quantity of water in the water receiving chamber (6) and operable in the event of the quantity of water **in that** chamber (6) falling below a predetermined value to switch the water heating means (12) from its low power to its high power setting.

2. An appliance as claimed in claim 1 wherein a sensor is provided to sense the quantity of liquid remaining in the water receiving chamber (6), said sensor being operably coupled to the switch means (20).

3. An appliance as claimed in claim 2 wherein the sensor senses the level of water in the chamber (6).

4. An appliance as claimed in claim 3 wherein the sensor comprises a float (22).

5. An appliance as claimed in claim 4 wherein the float is coupled magnetically to the switch means (20).

6. An appliance as claimed in claim 3 wherein the sensor comprises an optical sensor.

7. An appliance as claimed in claim 2 wherein the sensor comprises a weight sensor.

8. An appliance as claimed in any of claims 2 to 7 wherein the sensor is arranged to operate the switch means (20) when the receiving chamber (6) is substantially empty.

9. An appliance as claimed in any preceding claim wherein the lower power setting is chosen such as to be insufficient to boil the water entering the heating chamber (4), for example up to about 1 kilowatt.

10. An appliance as claimed in any preceding claim wherein the high power setting is up to about 3 kilowatts.

11. An appliance as claimed in any preceding .claim wherein the heating means (12) comprises two heaters (14,16) which are selectively connected in parallel by the switch means (20).

12. An appliance as claimed in any preceding claim wherein the heating means (12) comprises sheathed heating elements, preferably underfloor sheathed heating elements, or thick film heating elements.

13. A method of treating and heating water comprising the steps of:
supplying water to be treated and heated to a water receiving chamber (6) ;
passing said water through a water treatment means (8) to a water heating chamber (4) ; and
energising a water heating means (12) associated with the water heating chamber (4) at a first, relatively low power; **characterised by** :
sensing the quantity of water present in the water receiving chamber (6);
and, when less than a predetermined quantity of water is sensed as remaining in the water receiving chamber (6), heating the water in the water heating chamber (4) at a higher power.

14. A method as claimed in claim 13 wherein the switching is effected when the water receiving chamber (6) is substantially empty.

## Patentansprüche

1. Wasserheizvorrichtung (2), umfassend:
eine Wasserheizkammer (4) mit zugehörigen Wasserheizmitteln (12);
eine Wasseraufnahmekammer (6) zum Aufnehmen von in der Wasserheizkammer (4) zu erhitzendem Wasser;
ein Wasserbehandlungsmittel (8), das zwischen der Wasseraufnahmekammer (6) und der Wasserheizkammer (4) derart angeordnet ist, dass Wasser von der Wasseraufnahmekammer (6) durch das Behandlungsmittel (8) hindurch zur Wasserheizkammer (4) fließt; wobei
die Wasserheizmittel (12) zwischen einer Niederigleistungseinstellung und einer Hochleistungseinstellung umschaltbar sind; und
**dadurch gekennzeichnet, dass**
die Vorrichtung (2) ferner Schaltmittel (20) umfasst, die auf eine Wassermenge in der Wasseraufnahmekammer (6) reagieren und, wenn die Wassermenge in dieser Kammer (6) unter einen vorbestimmten Wert fällt, betätigbar sind, um die Wasserheizmittel (12) von ihrer Niedrigleistungseinstellung in die Hochleistungseinstellung umzuschalten.

2. Vorrichtung nach Anspruch 1, wobei ein Sensor bereitgestellt ist zum Erfassen der in der Wasseraufnahmekammer (6) restlichen Menge von Flüssigkeit, wobei der Sensor operativ mit den Schaltmitteln (20) gekoppelt ist.

3. Vorrichtung nach Anspruch 2, wobei der Sensor den Wasserpegel in der Kammer (6) erfasst.

4. Vorrichtung nach Anspruch 3, wobei der Sensor einen Schwimmer (22) umfasst.

5. Vorrichtung nach Anspruch 4, wobei der Schwimmer magnetisch mit den Schaltmitteln (20) geköppelt ist.

6. Vorrichtung nach Anspruch 3, wobei der Sensor einen optischen Sensor umfasst.

7. Vorrichtung nach Anspruch 2, wobei der Sensor einen Gewichtssensor umfasst.

8. Vorrichtung nach einem der Ansprüche 2 bis 7, wobei der Sensor derart eingerichtet ist, dass er die Schaltmittel (20) betätigt, wenn die Auf nahmekammer (6) im wesentlichen leer ist.

9. Vorrichtung nach einem der vorhergehenden Ansprüche, wobei die Niedrigleistungseinstellung derart gewählt ist, dass sie unzureichend ist, um das in die Heizkammer (4) einfließende Wasser zu kochen, beispielsweise bis zu etwa 1 Kilowatt beträgt.

10. Vorrichtung nach einem der vorhergehenden Ansprüche, wobei die Hochleistungseinstellung bis etwa 3 Kilowatt beträgt.

11. Vorrichtung nach einem der vorhergehenden Ansprüche, wobei die Heizmittel (12) zwei Heizvorrichtungen (14, 16) umfassen, die durch die Schaltmittel (20) selektiv parallel verbunden werden.

12. Vorrichtung nach einem der vorhergehenden Ansprüche, wobei die Heizmittel (12) ummantelte Heizelemente, vorzugsweise unterboden-ummantelte Heizelemente oder Heizelemente mit dicker Schutzschicht umfassen.

13. Verfahren zum Behandeln und Erhitzen von Wasser, umfassend die Schritte:
Zuführen von zu behandelndem und zu erhitzendem Wasser in eine Wasseraufnahmekammer (6);
Durchlaufen des Wassers durch ein Wasserbehäüdlüngsüiittel (8) hindurch zu einer Wasserheizkammer (4); und
Versorgen von der Wasserheizkammer (4) zugeordneten Wasserheizmitteln (12) mit Strom bei einer ersten, relativ geringen Leistung;
**gekennzeichnet durch**
Erfassen der in der Wasseraufnahmekammer (6) vorhandenen Wassermenge;
und, wenn weniger als eine vorbestimmte Wassermenge als Rest in der Wasseraufnahmekammer (6) erfasst wird, Erhitzen des Wassers in der Wasserheizkammer (4) mit höherer Leistung.

14. Verfahren nach Anspruch 13, wobei das Umschalten ausgeführt wird, wenn die Wasseraufnahmekammer (6) im wesentlichen leer ist.

## Revendications

1. Dispositif de chauffage d'eau (2) comprenant :
une chambre de chauffage d'eau (4) possédant un moyen de chauffage d'eau (12) qui lui est associé ;
une chambre de réception d'eau (6) destinée à recevoir l'eau devant être chauffée dans la chambre de chauffage d'eau (4) ;
un moyen de traitement d'eau (8) disposé entre la chambre de réception d'eau (6) et la chambre de chauffage d'eau (4) de façon à ce que l'eau s'écoule entre la chambre de réception d'eau (6) et la chambre de chauffage d'eau (4) en traversant le moyen de traitement (8) ; dans lequel :
ledit moyen de chauffage d'eau (12) est commutable entre une configuration faible puissance et une configuration forte puissance ; et **caractérisé en ce que** :
ledit dispositif (2) comprend en outre un moyen de commutation (20) sensible à une quantité d'eau contenue dans la chambre de réception d'eau (6) et adapté pour fonctionner si la quantité d'eau contenue dans la chambre (6) tombe en dessous d'une valeur prédéterminée afin de faire passer le moyen de chauffage d'eau (12) de sa configuration faible puissance à sa configuration forte puissance.

2. Dispositif selon la revendication 1, dans lequel un détecteur est disposé pour détecter la quantité de liquide restante dans la chambre de réception d'eau (6), ledit détecteur étant fonctionnellement couplé au moyen de commutation (20).

3. Dispositif selon la revendication 2, dans lequel le détecteur détecte le niveau d'eau dans la chambre (6).

4. Dispositif selon la revendication 3, dans lequel le détecteur comprend un flotteur (22).

5. Dispositif selon la revendication 4, dans lequel le flotteur est couplé magnétiquement au moyen de commutation (20).

6. Dispositif selon la revendication 3, dans lequel le détecteur comprend un détecteur optique.

7. Dispositif selon la revendication 2, dans lequel le détecteur comprend un détecteur de poids.

8. Dispositif selon l'une quelconque des revendications 2 à 7, dans lequel le détecteur est agencé pour actionner le moyen de commutation (20) lorsque la chambre de réception (6) est sensiblement vide.

9. Dispositif selon l'une quelconque des revendications précédentes, dans lequel la configuration faible puissance est choisie de manière à être insuffisante pour faire bouillir l'eau pénétrant dans la chambre de chauffage (4), par exemple jusqu'à environ 1 kilowatt.

10. Dispositif selon l'une quelconque des revendications précédentes, dans lequel la configuration forte puissance atteint environ jusqu'à 3 kilowatts.

11. Dispositif selon l'une quelconque des revendications précédentes, dans lequel le moyen de chauffage (12) comprend deux dispositifs chauffants (14, 16) qui sont connectés en parallèle de manière sélective par le moyen de commutation (20).

12. Dispositif selon l'une quelconque des revendications précédentes, dans lequel le moyen de chauffage (12) comprend des éléments chauffants sous gaine, de préférence des éléments chauffants sous gaine disposés sous plancher, ou des éléments chauffants à couche épaisse.

13. Procédé de traitement et de chauffage d'eau comprenant les étapes consistant à :
fournir l'eau devant être traitée et chauffée à une chambre de réception d'eau (6) ;
faire passer ladite eau à travers un moyen de traitement d'eau (8) dans une chambre de chauffage d'eau (4) ; et
mettre sous tension un dispositif de chauffage d'eau (12) associé à la chambre de chauffage d'eau (4) avec une première puissance, relativement faible ; **caractérisé par** les étapes consistant à :
détecter la quantité d'eau dans la chambre de réception d'eau (6) ;
et, lorsqu'on détecte que la quantité d'eau restante dans la chambre de réception d'eau (6) est inférieure à une quantité d'eau prédéterminée, chauffer l'eau contenue dans la chambre de chauffage d'eau (4) avec une puissance plus élevée

14. Procédé selon la revendication 13, dans lequel la commutation est effectuée lorsque la chambre de réception d'eau (6) est sensiblement vide.
